Europäisches Patentamt

European Patent Office

Office européen des brevets

(19)

(11) Veröffentlichungsnummer: **0 059 938**
**B1**

(12) **EUROPÄISCHE PATENTSCHRIFT**

(45) Veröffentlichungstag der Patentschrift:
**19.09.84**

(21) Anmeldenummer: **82101661.5**

(22) Anmeldetag: **04.03.82**

(51) Int. Cl.³: **C 07 C 102/00, C 07 C 103/147**

(54) **Verfahren zur Granulierung von Oxamid.**

(30) Priorität: **10.03.81 DE 3108962**

(43) Veröffentlichungstag der Anmeldung:
**15.09.82 Patentblatt 82/37**

(45) Bekanntmachung des Hinweises auf die Patenterteilung:
**19.09.84 Patentblatt 84/38**

(84) Benannte Vertragsstaaten:
**AT BE CH DE FR GB IT LI NL**

(56) Entgegenhaltungen:
**DE - A - 1 927 846**
**DE - A - 1 942 555**
**DE - A - 2 439 856**

(73) Patentinhaber: **HOECHST AKTIENGESELLSCHAFT,**
**Postfach 80 03 20, D-6230 Frankfurt am Main 80 (DE)**

(72) Erfinder: **Riemenschneider, Wilhelm, Dr.,**
**Loreleistrasse 45, D-6230 Frankfurt am Main 80 (DE)**

## Beschreibung

Oxamid ( = Oxalsäurediamid) ist als Langzeit-Düngemittel bekannt. Seine Depotwirkung beruht auf dem langsamen Abspalten von Stickstoff in einer für die Wurzeln verwertbaren Form während der gesamten Vegetationsperiode der Pflanze.

In der Praxis von Freilandversuchen hat sich herausgestellt, daß Oxamid seine Langzeitwirkung nur dann optimal entfalten kann, wenn es in granulierter Form dem Boden zugeführt wird. Außerdem ist eine Granulierung zur Verbesserung der Riesel- und Streufähigkeit des Produktes notwendig und vorteilhaft.

Da jedoch Oxamid infolge seiner Substanzeigenschaften u. a. außerordentlich gut fließfähige Kristalle bildet, die untereinander nur sehr geringe Adhäsionstendenz besitzen und auch wegen ihres sehr hohen und zu Zersetzungen führenden Schmelzpunktes nicht geschmolzen werden können, hat es nicht an Versuchen gefehlt, durch Zusatz von Binde- oder Vernetzungsmitteln zu festen Oxamid-Granulaten zu kommen.

So ist z. B. die Umsetzung des Oxamids mit Formaldehyd-Harnstoff-Kondensaten in der DE-PS 1 927 846 und der US-PS 3 248 255 beschrieben. Die Verfahren sind recht umständlich und mit der lästigen Manipulation von Formaldehyd verbunden, was einen erheblichen technischen Aufwand bedingt.

Der Zusatz von stickstoffhaltigen Bindemitteln, wie z. B. von Alkali- oder Erdalkali-Nitraten, führt zwar zu einem Granulat von hoher Festigkeit, er hat jedoch den Nachteil, daß durch die Wasserlöslichkeit und teilweise Hygroskopizität dieser Bindemittel die Bodenfeuchte das Granulat wieder zerkrümeln läßt oder die Luftfeuchte, z. B. in tropischen oder subtropischen Gebieten, das Granulat zum Erweichen und damit zum Verkleben bringt.

Es wurde nun überraschenderweise gefunden, daß diese Granulierungsschwierigkeiten überwunden werden können, wenn man fließfähiges, pulverförmiges Oxamid ohne Zusatz von Bindemitteln, jedoch mit einem Feuchtigkeitsgehalt von 2 bis 8 Gew.-% Wasser, bezogen auf das Oxamid, unter einem Preßdruck zwischen 30 und 150 kp/cm² zu Formkörpern preßt.

Nach den bekannten, obenerwähnten Substanzeigenschaften des Oxamids war es um so überraschender, daß durch eine so einfache Maßnahme, wie das Anfeuchten des Produktes mit einer definierten Wassermenge und das anschließende Verpressen mit einem bestimmten Druck, ein haltbarer Preßkörper erzeugt werden kann.

Das nach dem vorliegenden Verfahren hergestellte Oxamid-Granulat ist außerordentlich formstabil. Es übersteht z. B. einen einstündigen Rütteltest in einer Rüttelmaschine ohne Abrieb, und es ist außerdem so feuchtigkeitsunempfindlich, daß es auch nach 24stündigem Lagern unter Wasser bei Normaltemperatur noch nicht zerfällt.

Das Anfeuchten des Oxamids kann z. B. nach dem Versetzen mit der berechneten Menge Wasser in handelsüblichen Mischvorrichtungen, z. B. in einem Schneckenmischer, vorgenommen werden. Da bei der chemischen Herstellung das Oxamid im allgemeinen aber zunächst in wasserfeuchtem Zustand anfällt, z. B. mit Wassergehalten bis zu 20 Gew.-%, kann man auch so verfahren, daß man die Trocknung so einstellt, daß die Restfeuchte dem geforderten Wassergehalt für die Granulierung entspricht.

Der Feuchtigkeitsgehalt des Oxamids vor dem Preßvorgang soll zwischen 2 und 8 Gew.-% Wasser liegen, wobei es dicht an diesen Grenzen noch ein gewisses Übergangsgebiet gibt. Bei Wassergehalten unter 2 Gew.-% zeigt der geformte Preßling nach dem Rütteln bereits deutliche Risse und zerfällt dann leicht zu kleinen Partikeln. Bei Wassergehalten über 8 Gew.-% sinkt die Rüttelfestigkeit des Preßlings ebenfalls wieder merklich ab, was ein leichtes Zerkrümeln zur Folge hat. Bevorzugt ist ein Feuchtigkeitsgehalt zwischen 5 und 6 Gew.-% Wasser, bezogen auf das Oxamid.

Der Preßdruck, mit dem das erfindungsgemäß angefeuchtete Oxamid in Formlinge übergeführt wird, ist vorzugsweise auf den Bereich zwischen 30 und 150 kp/cm² begrenzt, wobei unterhalb und oberhalb dieser Grenzen noch fließende Übergänge über einige kp bestehen. Kleinere Preßdrücke bis ca. 25 kp/cm² ergeben Formlinge, deren Festigkeit zu wünschen übrig läßt und Preßdrücke über 150 kp/cm² ergeben Formlinge, die in sich geschichtet sind und damit Ansatzpunkte für Risse bilden. Bevorzugt sind Preßdrücke zwischen 50 und 150 kp/cm².

Die Temperatur des zu pressenden angefeuchteten Oxamids ist nicht kritisch und liegt vorzugsweise zwischen 1°C und der Grenze zur Siedetemperatur des Wassers, insbesondere zwischen 15 und 50°C.

Man kann kristallines Oxamid in Substanz einsetzen oder auch Mischungen von Oxamid mit anderen Substanzen verwenden, die z. B. eine Düngewirkung oder eine bodenverbessernde Wirkung oder auch nur eine Streck- bzw. Verdünnungswirkung besitzen, jedoch in Wasser schwer- oder unlöslich sein sollen. Beispielsweise kommen als Mischkomponenten Thomasmehl, Kalkstickstoff oder schwerlösliche Phosphate in feinteiliger Form in Frage. Das Mischungsverhältnis ist nicht kritisch, jedoch sollte der Oxamidanteil vorzugsweise mindestens 50 Gew.-% betragen. Er kann aber auch unter 50 Gew.-% liegen, falls die verwendeten Zusatzstoffe die Granuliereigenschaften des Gemisches begünstigen bzw. verbessern. Die erfindungsgemäße Granulierung kann mit üblichen Preßvorrichtungen wie Granulierpressen, Stempeldruckpressen oder Zahnradkompaktpressen in kontinuierlicher oder dis-

# 0 059 938

kontinuierlicher Arbeitsweise durchgeführt werden.

Ein Trocknen der fertigen Formlinge erübrigt sich, weil ein Teil des den Granalien anhaftenden Wassers bereits durch die entstehende Preßwärme verdampft. Das Granulat kann nach dem Pressen sofort abgesackt und ohne Abriebbildung transportiert werden. Die Preßkörper bzw. Granulatkörner haben bevorzugt die bei Düngemittelgranalien üblichen Partikelgrößen und Partikeldurchmesser, entsprechend den Erfordernissen für die Praxis, insbesondere im Hinblick auf deren Ausbringung und Dosierung.

Erfindungsgemäß hergestelltes Oxamidgranulat ist gegen Bodenfeuchtigkeit weitgehend beständig und ist ausgezeichnet lagerungsstabil, auch unter der Einwirkung von Luftfeuchtigkeit.

Die Erfindung wird durch die nachstehenden Beispiele näher erläutert, ohne sich jedoch auf diese zu beschränken.

Beispiel

Für die in der Tabelle 1 aufgeführten Granulierversuche 1 bis 18 werden zunächst jeweils Proben von kristallinem Oxamid (Reinheitsgrad = 99,5—99,8%) mit den in der Tabelle 1 angegebenen Mengen Wasser versetzt und in einem Schneckenmischer homogenisiert. Die dabei jeweils erhaltenen Proben von feuchtem Oxamid werden anschließend in einer üblichen Tablettiermaschine mit einstellbarem Stempel-Preßdruck unter Anwendung des ebenfalls in der Tabelle 1 jeweils angegebenen Preßdruckes verpreßt. Die Festigkeit der erhaltenen zylinderförmigen Tabletten ($\varnothing$ = ca. 6 mm, Höhe = ca. 3 mm) wird mit einer üblichen Prüfmaschine getestet, die unter meßbarem Druck, angegeben in [KN] (= Kilo-Newton), einen Dorn auf die Tablette preßt und den Berstdruck als Maß für die Festigkeit anzeigt. Die Tabletten werden außerdem auf Wasserfestigkeit durch 24stündiges Lagern unter Leitungswasser sowie auf Stabilität und Abriebfestigkeit bei einstündiger Belastung in einer in der Granulatprüfung üblichen Rüttelmaschine geprüft. Die Versuchsergebnisse sind in der Tabelle 1 zusammengefaßt wiedergegeben. Die Granulierversuche Nr. 1, 2, 15, 16, 17 und 18 sind Vergleichsversuche und fallen nicht unter den beanspruchten Erfindungsgegenstand.

Tabelle 1

| Granulier-Versuch Nr. | Wassergehalt des Ausgangs-oxamids [Gew.-%] | Preßdruck [kp/cm$^2$] | Festigkeit des Formkörpers [KN] | Zustand des Formkörpers | |
|---|---|---|---|---|---|
| | | | | nach 24 Std. unter Wasser (20°C) | nach 1 Std. in der Rüttelmaschine |
| 1 | 0 | 50 | 5 | zerfällt | große Risse |
| 2 | 1 | 50 | 5—10 | zerfällt | große Risse |
| 3 | 2 | 50 | 15 | stabil | kleine Risse |
| 4 | 2 | 100 | 15 | stabil | große Risse |
| 5 | 3 | 50 | 15 | stabil | angegriffen |
| 6 | 3 | 100 | 15 | stabil | kleine Risse |
| 7 | 4 | 50 | 15 | stabil | angegriffen |
| 8 | 4 | 100 | 15 | stabil | schwach angegriffen |
| 9 | 5 | 50 | 15 | stabil | gut erhalten |
| 10 | 5 | 100 | 15 | stabil | kein Abrieb |
| 11 | 6 | 50 | 15 | stabil | kein Abrieb |
| 12 | 6 | 100 | 15 | stabil | gut erhalten |
| 13 | 8 | 50 | 15 | stabil | schwach angegriffen |

3

Tabelle 1 (Fortsetzung)

| Granulier-Versuch Nr. | Wassergehalt des Ausgangs-oxamids [Gew.-%] | Preßdruck [kp/cm²] | Festigkeit des Formkörpers [KN] | Zustand des Formkörpers | |
|---|---|---|---|---|---|
| | | | | nach 24 Std. unter Wasser (20°C) | nach 1 Std. in der Rüttelmaschine |
| 14 | 8 | 100 | 15 | stabil | angegriffen |
| 15 | 10 | 50 | 15 | stabil | kleine Risse |
| 16 | 10 | 100 | 15 | stabil | große Risse |
| 17 | 5 | 25 | 15 | zerfällt | große Risse |
| 18 | 5 | 160 | 15 | zerfällt | große Risse |

## Patentansprüche

1. Verfahren zur Granulierung von Oxamid ( = Oxalsäurediamid), dadurch gekennzeichnet, daß man pulverförmiges Oxamid mit einem Feuchtigkeitsgehalt von 2 bis 8 Gew.-% Wasser, bezogen auf das Oxamid, unter einem Preßdruck zwischen 30 und 150 kp/cm² zu Formkörpern preßt.

2. Verfahren nach Anspruch 1, dadurch gekennzeichnet, daß das Oxamid 5 bis 6 Gew.-% Wasser enthält.

3. Verfahren nach Anspruch 1 und 2, dadurch gekennzeichnet, daß man mit einem Preßdruck zwischen 50 und 100 kp/cm² preßt.

4. Verfahren nach Ansprüchen 1 bis 3, dadurch gekennzeichnet, daß man dem Oxamid bis zu 50 Gew.-% düngewirksame, bodenverbessernde oder inerte Stoffe, die in Wasser schwer- oder unlöslich sind, in feinteiliger Form zusetzt.

## Claims

1. A process for granulating oxamide (oxalic acid diamide), which comprises compressing pulverulent oxamide having a moisture content of 2 to 8% by weight of water, relative to the oxamide, under an applied pressure between 30 and 150 kp/cm² to give molded products.

2. The process as claimed in claim 1, wherein the oxamide contains 5 to 6% by weight of water.

3. The process as claimed in claim 1 and 2, wherein compression is carried out at an applied pressure between 50 and 100 kp/cm².

4. The process as claimed in any of claims 1 to 3, wherein up to 50% by weight of substances which are effective as fertilizers, improve the soil or are inert and which are sparingly soluble or insoluble in water are added in a finely divided form to the oxamide.

## Revendications

1. Procédé de granulation d'oxamide (diamide de l'acide oxalique) caractérisé en ce qu'on comprime de l'oxamide pulvérulent, ayant une teneur en humidité de 2 à 8% en poids d'eau sur la base de l'oxamide, sous une pression de compression comprise entre 2,94 et 14,72 MPa (entre 30 et 150 kgf/cm²) pour obtenir des corps façonnés.

2. Procédé selon la revendication 1, caractérisé en ce que l'oxamide contient de 5 à 6% en poids d'eau.

3. Procédé selon l'une des revendications 1 ou 2, caractérisé en ce que la compression est effectuée sous une pression comprise entre 4,91 et 9,81 MPa (entre 50 et 100 kgf/cm²).

4. Procédé selon l'une des revendications 1 à 3, caractérisé en ce que l'on ajoute à l'oxamide jusqu'à 50% en poids de substance à effet fertilisant, améliorant le sol ou inerte, difficilement solubles ou insolubles dans l'eau, sous forme finement divisée.